# EUROPÄISCHE PATENTSCHRIFT

(11) **EP 1 074 186 B1**
(45) Veröffentlichungstag und Bekanntmachung des Hinweises auf die Patenterteilung: **17.02.2016**
(21) Anmeldenummer: 00115888.0
(22) Anmeldetag: 25.07.2000
(51) Int. Cl.: A23L 3/28, A23L 3/26, A23L 3/005, B65B 55/16, B65B 55/08, G08B 13/12, G01N 27/20

(54) **Bestrahlungsvorrichtung für die Behandlung von Lebensmitteln**
Irradiation apparatus for food treatment
Appareil d'irradiation pour traitement d'aliments

(30) Priorität: 29.07.1999 DE 19935379
(43) Veröffentlichungstag der Anmeldung: 07.02.2001
(73) Patentinhaber: Heraeus Noblelight GmbH, 63450 Hanau (DE)
(72) Erfinder: Herter, Beate, Dr., 76137 Karlsruhe (DE); Eckert, Jörg, 63486 Bruchköbel (DE); Brieden, Karl-Wilhelm, 63579 Freigericht (DE)
(74) Vertreter: Kühn, Hans-Christian

(56) Entgegenhaltungen:
- EP-A- 0 451 608
- EP-A- 0 591 001
- WO-A-97/33469
- DE-A- 4 037 483
- DE-A- 19 651 977
- US-A- 3 941 975
- US-A- 5 139 850
- US-A- 5 597 597
- PATENT ABSTRACTS OF JAPAN vol. 1996, no. 10, 31. Oktober 1996 (1996-10-31) -& JP 08 163974 A (MURATA:KK), 25. Juni 1996 (1996-06-25)
- PATENT ABSTRACTS OF JAPAN vol. 010, no. 215 (P-481), 26. Juli 1986 (1986-07-26) -& JP 61 053559 A (FUJITSU LTD), 17. März 1986 (1986-03-17)
- PATENT ABSTRACTS OF JAPAN vol. 016, no. 491 (P-1434), 12. Oktober 1992 (1992-10-12) & JP 04 177155 A (NEC CORP), 24. Juni 1992 (1992-06-24)

## Beschreibung

Die vorliegende Erfindung betrifft eine Bestrahlungsvorrichtung für die Behandlung von Lebensmitteln oder Lebensmittelpackstoffen, mit einem Prozessraum, mit einer Transportvorrichtung für den Transport eines Lebensmittelbehandlungsgutes durch den Prozessraum in einer Transportebene, mit mindestens einer oberhalb der Transportebene vorgesehenen Bestrahlungslampe, und mit einer für die von der Bestrahlungslampe emittierten Strahlung durchlässigen Abdeckung aus einem spröden Material, die zwischen Bestrahlungslampe und Transportebene angeordnet ist.

WO 97/33469 offenbart ein Schneckenförderungssystem für den Transport eines Lebensmittelbehandlungsgutes, das einen Tunnel und helixförmig angeordnete Förderschaufeln aufweist. Der Tunnel rotiert mit der Helix und das Fördersystem kann geneigt werden, um die Geschwindigkeit zu erhöhen. Eine Bestrahlungslampe ist im Prozessraum angeordnet und eine Abdeckung zwischen der Bestrahlungslampe und den Fördererwänden.

DE 40 37 483 beschreibt eine Bruchsicherung für eine Filterscheibe in der Anwendung für Solarbräuner im Solariumbereich, um zu vermeiden, dass Risse in der Filterschicht zu Hautschädigungen der Solariumnutzer führen. Die Filterschicht filtert zumindest die hautschädliche UVC-Strahlung heraus.

Eine gattungsgemäße Bestrahlungsvorrichtung ist in der Produktinformationsschrift der Heraeus Noblelight GmbH "Heraeus IR-Module KR: Wärme nach Maß im Know-How-Pack" (Druckvermerk: 2C 5.97/VN.Ku) beschrieben. Daraus ist eine Infrarotanlage zu entnehmen, die mit einem IR-Bestrahlungsmodul bestückt ist, bei dem mehrere sogenannte Zwillingsrohrstrahler in einem gemeinsamen Rahmen gehalten werden. In einer Sonderausfertigung umfasst das Bestrahlungsmodul zusätzlich eine IR-durchlässige Abdeckplatte aus Glas. Das Modul wird im Prozessraum der Infrarotanlage oberhalb eines durchlaufenden Behandlungsgutes montiert, wobei die Abdeckplatte zwischen dem Behandlungsgut und den Zwillingsrohrstrahlern angeordnet ist. Die bekannte Infrarotanlage wird beispielsweise zum Trocknen, Erwärmen oder Härten eines durchlaufenden Behandlungsgutes eingesetzt, wobei die Abdeckplatte ein Herunterfallen von Staub- oder Schmutzpartikeln auf das Behandlungsgut verhindert.

Die bekannte Infrarotanlage ist jedoch für einen Einsatz zum Erwärmen von Lebensmittelprodukten oder für die Formgebung und Entkeimung von Verpackungsmaterialien für Lebensmittelverpackungen nur bedingt geeignet. Denn bei der Herstellung bzw. Weiterverarbeitung von Lebensmitteln und Lebensmittelverpackungen werden an die Reinhaltung besonders hohe Anforderungen gestellt. Bei der bekannten Infrarotanlage kann es jedoch vorkommen, daß herabfallende Bruchstücke aus der Abdeckplatte das Behandlungsgut verunreinigen, ohne daß dies bemerkt wird.

Der Erfindung liegt daher die Aufgabe zugrunde, eine Verbesserung der bekannten Bestrahlungsvorrichtung anzugeben, die den strengen Anforderungen an Hygiene und Betriebssicherheit gerecht wird, wie sie sich bei der Lebensmittelverarbeitung stellen.

Diese Aufgabe wird ausgehend von der eingangs beschriebenen Bestrahlungsvorrichtung erfindungsgemäß dadurch gelöst, daß die Abdeckung mit mindestens einer Leiterbahn aus einem elektrisch leitenden Material versehen ist, und daß die Leiterbahn mit einer Auswerteeinheit verbunden ist, die fortlaufend eine elektrische Eigenschaft der Leiterbahn erfaßt.

Derartige Bestrahlungsvorrichtungen werden beispielsweise zum Erwärmen von Lebensmittelprodukten, wie Backwaren, Fleisch- und Fritierwaren oder für die Formgebung und Entkeimung von Verpackungsmaterialien für Lebensmittelverpackungen eingesetzt. Je nach Einsatzzweck handelt es sich bei den Bestrahlungslampen um Infrarot-Strahler und/oder um UV-Strahler.

Mittels der von der Auswerteeinheit fortlaufend erfaßten elektrischen Eigenschaft der Leiterbahn kann es sich beispielsweise um eine Messung des elektrischen Widerstandes der Leiterbahn handeln, um einen in der Leiterbahn fließenden Strom, oder um eine an der Leiterbahn angelegte Spannung. Die Messung der elektrischen Eigenschaft kann kontinuierlich oder nach vorgegebenen Zeitintervallen erfolgen.

Bei einem Riß der Abdeckplatte ändert sich die elektrische Eigenschaft der Leiterbahn, sofern letztere von dem Riß mitbetroffen ist. Um dies zu gewährleisten ist die Leiterbahn so ausgelegt, daß sie bei einem Riß der Abdeckplatte ebenfalls zerbricht oder wenigstens derart verformt wird, daß diese Verformung zu einer Änderung der erfaßten elektrischen Eigenschaft führt. Diese Änderung wird von der Auswerteeinheit erfaßt und in ein Signal umgesetzt. Das Signal kann zum Beispiel ein Warnsignal für eine Bedienungsperson sein oder ein elektrischer Impuls, der zum Abschalten der Transportvorrichtung oder der Bestrahlungsvorrichtung führt. Sprünge oder Brüche der Abdeckplatte können so frühzeitig erkannt und von eventuellen Bruchstücken verunreinigtes Behandlungsgut sofort aussortiert werden.

Dadurch, daß eine elektrische Eigenschaft der Leiterbahn erfaßt wird, kann eine besonders einfache und preiswerte Auswerteeinheit eingesetzt werden, wie beispielsweise handelsübliche Widerstands-, Strom- oder Spannungsmeßgeräte.

Es ist mindestens eine Leiterbahn vorgesehen. Diese kann in vielfältiger Weise auf der Abdeckung oder eingebettet in der Abdeckung verlaufen. Selbstverständlich können auch mehrere, parallel geschaltete Leiterbahnen mit gleichem oder unterschiedlichem Design auf der Abdeckung vorgesehen sein. Der konkrete Verlauf und die Dichte der Leiterbahn-Belegung hängen von den Erfordernissen im Einzelfall ab. Das Erfassen eines Sprunges der Abdekkung ist umso frühzeitiger und sicherer zu gewährleisten, je dichter die Belegung der Leiterbahn auf oder in der Abdeckung ist, und je näher die Leiterbahn an demjenigen Bereich oder an denjenigen Bereichen der Abdeckung verläuft, die von dem Sprung betroffen sind. Da Risse einer Glasplatte üblicherweise am Rand beginnen oder enden, sind besonders die Randbereiche zu beachten. Die geometrische Form der Abdeckung ist für die Erfindung nicht entscheidend. Sie kann beispielsweise als ebene oder gebogene Platte, als Haube oder Wanne, Rohr oder Hülse ausgebildet sein. Üblicherwiese besteht die Abdeckung aus Glas. Die erfindungsgemäße Lehre ist jedoch auch für Bestrahlungsvorrichtungen mit Abdeckungen aus anderen spröden, bruchgefährdeten Material, wie Keramik, gleichermaßen vorteilhaft anwendbar.

Als günstig hat es sich eine Leiterbahn erwiesen, die mindestens von einem Randbereich zum gegenüberliegenden Randbereich der Abdeckung verläuft. Dadurch wird gewährleistet, daß ein quer zur Leiterbahn verlaufender Riß frühzeitig erkannt wird. Die Leiterbahn kann die beiden sich gegenüberliegenden Randbereiche direkt verbinden; im Sinne einer frühzeitigen Rißerkennung kann aber vorteilhafter sein, auch andere Bereiche der Abdeckplatte einzubeziehen, indem die Leiterbahn auch dort entlang geführt wird.

In dieser Hinsicht hat sich eine Leiterbahn besonders bewährt, die um den Umfang der Abdeckung verläuft. Leiterbahnen, insbesondere metallische Leiterbahnen, können die Transmission der von der Bestrahlungslampe emittierten Strahlung behindern. Um den Umfang der Abdeckplatte verlaufende Leiterbahnen haben zum einen den Vorteil, daß Risse in den Randbereichen der Abdeckplatte frühzeitig detektiert werden. Darüberhinaus wird dadurch eine große, von Leiterbahnen freie Bestrahlungsfläche in der Mitte der Abdeckplatte ermöglicht. Der Verlauf der Leiterbahn-Linien um den Umfang der Abdeckplatte kann beispielsweise gerade, mäander- oder wellenförmig sein.

Es hat sich auch eine Ausführungsform der Bestrahlungsvorrichtung bewährt, bei der die Leiterbahn von einem Ende der Abdeckung zum gegenüberliegenden Ende in Form einer Schleife verläuft. Unter einer Schleife wird dabei ein Verlauf verstanden, bei der sich Teilstrecken der Leiterbahn nahe kommen. Vorteilhafterweise verläuft die Leiterbahn beispielsweise als Schleife in Form ähnlich einer 8 über die Abdeckung, denn abgesehen von dem kleinen, mittleren Bereich, in dem die Leiterbahnen relativ eng beieinander liegen, sind relativ große, von Leiterbahnen freie Bestrahlungsflächen realisierbar. Gleichzeitig wird eine Rißausbreitung in allen Richtungen möglichst frühzeitig erkannt.

Die Leiterbahnen befinden sich vorzugsweise auf der Seite der Abdeckung, die der Bestrahlungslampe zugewandt ist. Dies gewährleistet, daß keine sich ablösende Bestandteile der Leiterbahnen auf das Lebensmittelbehandlungsgut gelangen und dies verunreinigen können.

Weiterhin ist es vorteilhaft, wenn die Abdeckung aus einem für infrarote und /oder ultraviolette Strahlung transparentem Material besteht. Insbesondere für eine Verwendung der Bestrahlungsvorrichtung zur Entkeimung von Lebensmitteln oder Lebensmittelverpackungen mittels UV- Strahlung ist eine Abdeckung geeignet, die aus Quarzglas besteht, da dies für den fraglichen Wellenlängenbereich transparent ist.

Da die Bestrahlungsvorrichtung im Bereich der Lebensmittelindustrie eingesetzt werden soll, wo infrarote und/oder ultraviolette Strahlung angewendet wird, ist es zweckmäßig, wenn die Leiterbahnen dauerhaft gegenüber der Einwirkung von IR- und/oder UV-Strahlung beständig sind. Andernfalls würden Fehlermeldungen registriert werden, die nicht im Zusammenhang mit Rissen in der Abdeckung stehen, was das Warnsystem unbrauchbar machen würde.

Im Sinne einer guten elektrischen Leitfähigkeit hat es sich bewährt, wenn derartige Leiterbahnen im wesentlichen Palladium (Pd) und/oder Silber (Ag) und/oder Gold (Au), bzw. Legierungen dieser Metalle enthalten.

Als besonders vorteilhaft hat sich eine Leiterbahn erwiesen, die aus einer einbrennbaren Dickfilm-Leitpaste hergestellt ist. Durch das Einbrennen der Leiterbahn in die Abdeckung wird eine feste Verbindung mit dem Material der Abdeckung realisiert, so daß jede geometrische Veränderung der Abdeckung sofort und sicher erfaßt wird. Die Dickfilm-Leitpaste kann durch Aufpinseln oder Siebdrucken aufgebracht werden.

In dieser Hinsicht hat sich besonders eine Leitpaste bzw. eine damit ausgebildete Leiterbahn auf Basis einer Silber-Legierung bewährt. Derartige Pasten sind in bzw. auf Quarzglas einbrennbar, so daß eine gute Haftung der Leiterbahn auf dem Quarzglas gewährleistet wird. Derartige Leiterbahnen sind gegenüber UV-Strahlung stabil, was den Einsatz der erfindungsgemäßen Bestrahlungsvorrichtung für die UV-Entkeimung von Lebensmittelgütern oder Lebensmittelpackstoffen ermöglicht.

Als Aufbringtechnik für die Leiterbahnen sind neben den geschilderten Verfahren mittels einer Leitpaste grundsätzlich auch andere Verfahren in Betracht zu ziehen. Beispielsweise kommen Verfahren der Dünnfilmtechnik (z. B.Aufsputtern oder Bedampfen) in Frage, soweit damit dauerhaft eine ausreichende Haftung und UV-Beständigkeit der Leiterbahn auf der Abdeckung zu gewährleisten ist.

Nachfolgend wird die erfindungsgemäße Bestrahlungsvorrichtung anhand eines Ausführungsbeispiels und anhand einer Patentzeichnung näher erläutert. In der Patentzeichnung zeigen im einzelnen in schematischer Darstellung:
- **Figur 1**: eine erste Ausführungsform der erfindungsgemäßen Bestrahlungsvor richtung in einem Schnitt senkrecht zur Transportebene, und
- **Figur 2a, 2b, 2c**: eine Abdeckplatte mit jeweils einer darauf eingebrannten Leiter bahn in einer Draufsicht.

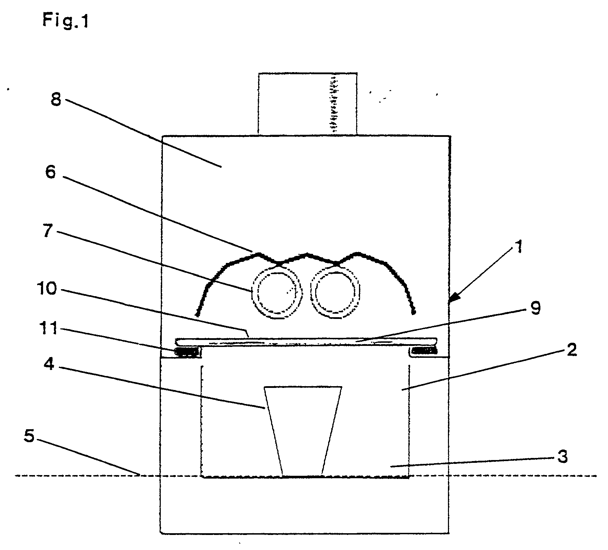

Die in Figur 1 dargestellte Bestrahlungsvorrichtung dient zum Entkeimen von Joghurt-Bechern durch UV-Bestrahlung. Eine nach dem gleichen Prinzip aufgebaute Bestrahlungsvorrichtung, jedoch mit Infrarot-Bestrahlung, kann auch für die Erwärmung oder Trockung von Lebensmitteln wie beispielsweise Getreideflocken eingesetzt werden.

Die Bestrahlungsvorrichtung weist beispielhaft ein Außengehäuse 1 auf, das einen Prozeßraum 2 umgibt. Auf einer Fördereinrichtung 3 aufliegend werden die Becher 4 senkrecht zur Zeichenebene durch den Prozeßraum 2 gefördert. Die Fördereinrichtung 3 definiert eine Förderebene 5, die in Figur 1 anhand einer gestrichelten Linie 5 symbolisiert ist. Im oberen Teil 8 des Außengehäuses 1 ist oberhalb der Förderebene 5 eine UV-Bestrahlungslampe 6 (im folgenden auch als Bestahlungsmodul bezeichnet) vorgesehen, die aus mehreren UV-Strahlern 7 gebildet wird, die UV-Strahlung bei einer Wellenlänge von 254 nm emittieren. Die UV-Strahler 7 sind gemeinsam im Gehäuse der Bestrahlungsmodul 6 parallel zueinander angeordnet. Zwischen dem Bestrahlungsmodul 6 und der Förderebene 5 ist eine Abdeckung 9 in Form einer Abdeckplatte aus Quarzglas vorgesehen, die ein Herabfallen von Verunreinigungen aus dem Bestrahlungsmodul 6 auf die Joghurt-Becher 4 verhindert. Die Abdeckplatte 9 wird von einem Metallrahmen 11 gehalten, der am oberen Teil 8 des Außengehäuses 1 befestigt ist.

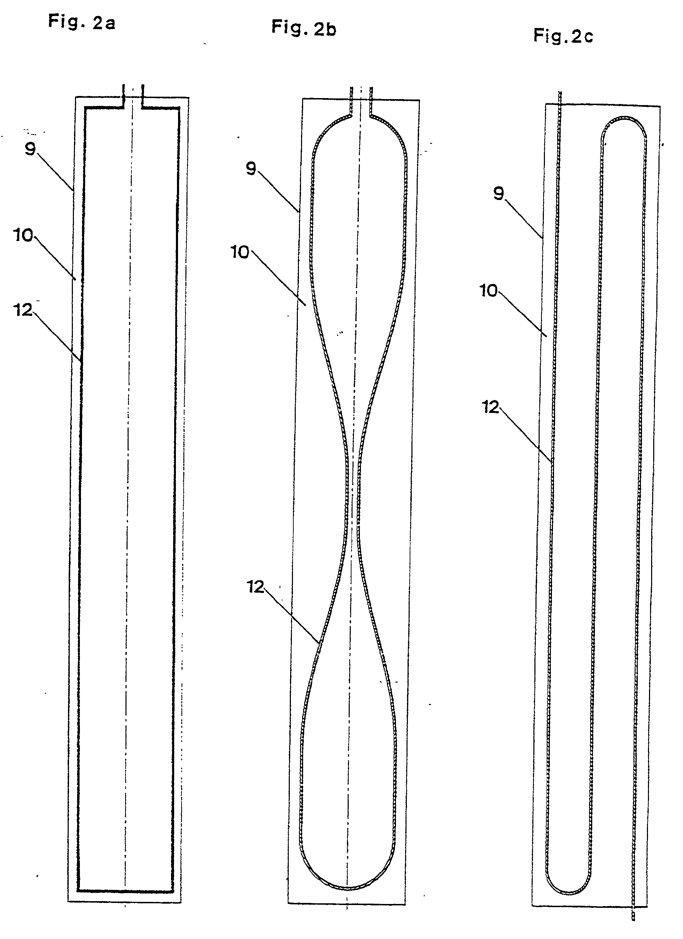

Die Dicke der Abdeckplatte 9 beträgt etwa 2 bis 3 mm. Auf ihrer dem Bestrahlungsmodul 6 zugewandten Oberseite 10 ist eine Leiterbahn aus einer Ag- oder PdAu-Legierung aufgebracht, wobei hierzu bekannte Auftragsverfahren wie Aufpinseln, Aufsprühen oder Siebdrukken von entsprechenden Leitpasten mit anschließenden Einbrennen angewendete werden. Verlauf, Abmessungen und Eigenschaften der so erzeugten Leiterbahnen werden weiter unten anhand der Figur 2a bis 2c erläutert. An den Enden der Leiterbahn kann beispielsweise die elektrische Spannung abgegriffen werden. Eine Auswerteschaltung erfasst im Fall des Bruchs der Abdeckplatte und der damit einhergehenden Unterbrechung der Leiterbahn(en) eine sprunghafte Änderung dieses elektrischen Wertes, wodurch ein Fehlerwarnsystem für die Bestrahlungsvorrichtung aktiviert wird.

Figur 2a zeigt eine Draufsicht auf die Oberseite 10 der Abdeckplatte 9. Die Leiterbahn 12 verläuft annähernd rechteckig, parallel am Rand zur rechteckigen Abdeckplatte 9. Die Dicke der Leiterbahn 12 beträgt hier und in den folgenden Figuren jeweils etwa 10 µm, die Breite jeweils etwa 2 mm. Eine weitere Ausführungsmöglichkeit für den Verlauf der Leiterbahn wird in Figur 2b gezeigt. Hier verläuft die Leiterbahn 12 in Form eine Schleife, die etwa dem Bild der Zahl Acht entspricht, jedoch ohne Kreuzung der Leiterbahn. Das Verhältnis von freier Fläche zu Leiterbahnlänge ist hier besonders günstig. In Figur 2c dagegen liegen die gewundenen Leiterbahnabschnitte dichter beieinander, was eine hohe Sicherheit dafür bietet, daß auch kleine, in relativ eng begrenzten Bereichen auftretende Risse erfasst werden. Die von Leiterbahnen gänzlich freien Bereiche der Abdeckplatte 9 sind bei diesem Leiterbahn-Design im Vergleich zu den Ausführungen gemäß Figur 2a oder 2b jedoch etwas kleiner.

## Patentansprüche

1. Bestrahlungsvorrichtung für die Behandlung von Lebensmitteln oder Lebensmittelpackstoffen, mit einem Prozeßraum, mit einer Transportvorrichtung für den Transport eines Lebensmittelsbehandlungsgutes durch den Prozeßraum in einer Transportebene, mit mindestens einer oberhalb der Transportebene vorgesehenen Bestrahlungslampe, und mit einer für die von der Bestrahlungslampe emittierten Strahlung durchlässigen Abdeckung aus einem spröden Material, die zwischen Bestrahlungslampe und Transportebene angeordnet ist, **dadurch gekennzeichnet, daß** die Abdeckung (9) mit mindestens einer Leiterbahn (12) aus einem elektrisch leitenden Material versehen ist, und daß die Leiterbahn (12) mit einer Auswerteeinheit verbunden ist, die fortlaufend eine elektrische Eigenschaft der Leiterbahn (12) erfaßt.

2. Bestrahlungsvorrichtung nach Anspruch 1, **dadurch gekennzeichnet, daß** die mindestens eine Leiterbahn (12) mindestens von einem Randbereich zum gegenüberliegenden Randbereich der Abdeckung (9) verläuft.

3. Bestrahlungsvorrichtung nach Anspruch 1 oder 2, **dadurch gekennzeichnet, daß** die Leiterbahn (12) um den Umfang der Abdeckung (9) verläuft.

4. Bestrahlungsvorrichtung nach Anspruch 1 oder 2, **dadurch gekennzeichnet, daß** die Leiterbahn (12) von einem Ende der Abdeckung (9) zum gegenüberliegenden Ende in Form mindestens einer Schleife verläuft.

5. Bestrahlungsvorrichtung nach einem der Ansprüche 1 bis 4, **dadurch gekennzeichnet, daß** die Leiterbahn (12) auf der Seite der Abdeckung (9) vorgesehen ist, die der Bestrahlungslampe (6) zugewandt ist.

6. Bestrahlungsvorrichtung nach einem der Ansprüche 1 bis 5, **dadurch gekennzeichnet, daß** die Abdeckung (9) aus einem für infrarote und /oder ultraviolette Strahlung transparentem Material besteht.

7. Bestrahlungsvorrichtung nach Anspruch 6, **dadurch gekennzeichnet, daß** die Abdekkung (9) aus Quarzglas besteht.

8. Bestrahlungsvorrichtung nach einem der vorhergehenden Ansprüche, **dadurch gekennzeichnet, daß** die Leiterbahn (12) aus einem für infrarote und/oder ultraviolette Strahlung beständigen Material besteht.

9. Bestrahlungsvorrichtung nach einem der vorhergehenden Ansprüche, **dadurch gekennzeichnet, daß** die Leiterbahn (12) Palladium und /oder Silber und /oder Gold enthält.

10. Bestrahlungsvorrichtung nach Anspruch 9, **dadurch gekennzeichnet, daß** die Leiterbahn (12) aus einereinbrennbaren Dickfilmleitpaste hergestellt ist.

## Claims

1. Irradiation apparatus for the treatment of food items or food item packaging materials, with a process space, with a transport device for transporting food item treatment goods in a transport plane through the process space, with at least one irradiation lamp that is provided above the transport plane, and with a cover made of a brittle material that is translucent for the radiation emitted by the irradiation lamp and is arranged between the irradiation lamp and the transport plane, **characterised in that** the cover (9) is provided with at least one printed conductor (12) made of an electrically conductive material, and **in that** the printed conductor (12) is connected to an analytical unit which continuously detects an electrical property of the printed conductor (12).

2. Irradiation apparatus according to claim 1 **characterised in that** the at least one printed conductor (12) extends at least from an edge area to the opposite edge area of the cover (9).

3. Irradiation apparatus according to claim 1 or 2, **characterised in that** the printed conductor (12) extends about the circumference of the cover (9).

4. Irradiation device according to claim 1 or 2, **characterised in that** the printed conductor (12) extends from one end of the cover (9) to the opposite end in the form of at least one loop.

5. Irradiation apparatus according to any one of the claims 1 to 4, **characterised in that** the printed conductor (12) is provided on the side of the cover (9) that faces the irradiation lamp (6).

6. Irradiation apparatus according to any one of the claims 1 to 5, **characterised in that** the cover (9) consists of a material that is transparent for infrared and/or ultraviolet radiation.

7. Irradiation apparatus according to claim 6, **characterised in that** the cover (9) consists of quartz glass.

8. Irradiation apparatus according to any one of the preceding claims, **characterised in that** the printed conductor (12) consists of a material that is resistant to infrared and/or ultraviolet radiation.

9. Irradiation apparatus according to any one of the preceding claims, **characterised in that** the printed conductor (12) contains palladium and/or silver and/or gold.

10. Irradiation apparatus according to claim 9, **characterised in that** the printed conductor (12) is made from a burn-in-type thick film conductive paste.

## Revendications

1. Dispositif d'irradiation destiné au traitement de produits alimentaires ou de matériaux d'emballage de produits alimentaires, comprenant un espace de procédé, comprenant un dispositif de transport pour le transport d'une marchandise de traitement de produits alimentaires à travers l'espace de procédé dans un plan de transport, comprenant au moins une lampe d'irradiation prévue au-dessus du plan de transport, et comprenant un couvercle perméable au rayonnement émis par la lampe d'irradiation, en matériau cassant, qui est disposé entre la lampe d'irradiation et le plan de transport, **caractérisé en ce que** le couvercle (9) est doté au moins d'une piste conductrice (12) en matériau conducteur d'électricité, et que la piste conductrice (12) est reliée à une unité d'évaluation qui détecte en continu une propriété électrique de la piste conductrice (12).

2. Dispositif d'irradiation selon la revendication 1, **caractérisé en ce que** l'au moins une piste conductrice (12) passe au moins d'une zone de bordure vers la zone de bordure opposée du couvercle (9).

3. Dispositif d'irradiation selon la revendication 1 ou 2, **caractérisé en ce que** la piste conductrice (12) passe sur le pourtour du couvercle (9).

4. Dispositif d'irradiation selon la revendication 1 ou 2, **caractérisé en ce que** la piste conductrice (12) passe d'une extrémité du couvercle (9) à l'extrémité opposée sous forme au moins d'une boucle.

5. Dispositif d'irradiation selon l'une des revendications 1 à 4, **caractérisé en ce que** la piste conductrice (12) est prévue sur le côté du couvercle (9) qui est tourné vers la lampe d'irradiation (6).

6. Dispositif d'irradiation selon l'une des revendications 1 à 5, **caractérisé en ce que** le couvercle (9) est composé d'un matériau transparent aux rayons infrarouges et/ou ultraviolets.

7. Dispositif d'irradiation selon la revendication 6, **caractérisé en ce que** le couvercle (9) est en verre de quartz.

8. Dispositif d'irradiation selon l'une des revendications précédentes, **caractérisé en ce que** la piste conductrice (12) est composée d'un matériau résistant aux rayons infrarouges et/ou ultraviolets.

9. Dispositif d'irradiation selon l'une des revendications précédentes, **caractérisé en ce que** la piste conductrice (12) contient du palladium et/ou de l'argent et/ou de l'or.

10. Dispositif d'irradiation selon la revendication 9, **caractérisé en ce que** la piste conductrice (12) est fabriquée dans une pâte conductrice à film épais pouvant cuire.
